**Europäisches Patentamt**

**European Patent Office**

**Office européen des brevets**

(19)

(11) Veröffentlichungsnummer: **0 177 874**
**B1**

(12) **EUROPÄISCHE PATENTSCHRIFT**

(45) Veröffentlichungstag der Patentschrift:
05.07.89

(51) Int. Cl.⁴: **C 08 L 69/00, C 08 L 51/04**

(21) Anmeldenummer: **85112391.9**

(22) Anmeldetag: **01.10.85**

(54) **Selbstverlöschende thermoplastische Formmasse.**

(30) Priorität: **06.10.84 DE 3436816**

(43) Veröffentlichungstag der Anmeldung:
**16.04.86 Patentblatt 86/16**

(45) Bekanntmachung des Hinweises auf die Patenterteilung:
**05.07.89 Patentblatt 89/27**

(84) Benannte Vertragsstaaten:
**BE DE FR GB IT NL**

(56) Entgegenhaltungen:
**EP-A- 0 034 252**
**EP-A- 0 064 692**

(73) Patentinhaber: **BASF Aktiengesellschaft,
Carl-Bosch-Strasse 38, D-6700 Ludwigshafen (DE)**

(72) Erfinder: **Muench, Volker, Dr., Luitpoldstrasse 114,
D-6700 Ludwigshafen (DE)**
Erfinder: **Wassmuth, Georg, Dr.,
von-Sturmfeder-Strasse 60, D-6700 Ludwigshafen (DE)**
Erfinder: **Mitulla, Konrad, Dr., Schwalbenweg 31,
D-6700 Ludwigshafen (DE)**
Erfinder: **Echte, Adolf, Dr., Leuschnerstrasse 42,
D-6700 Ludwigshafen (DE)**
Erfinder: **Hambrecht, Juergen, Werderstrasse 30,
D-6900 Heidelberg (DE)**

ACTORUM AG

## Beschreibung

Die Erfindung betrifft eine selbstverlöschende thermoplastische Formmasse auf der Grundlage von Styrol- und Acrylnitril enthaltenden, mit Dienen schlagzäh modifizierten Polymerisaten ·(ABS), Polycarbonaten und Halogen enthaltenden Flammschutzmitteln.

Zum Stand der Technik nennen wir:
(1) DE-PS 1 170 141
(2) DE-PS 1 810 993
(3) DE-OS 3 149 458.0
(4) DE-OS 3 210 284
(5) DE-OS 3 245 295.6 und
(6) EP-A 161 452 (veröffentlicht 24.10.1985)

Mischungen von Styrol- und Acrylnitril enthaltenden schlagzähen Polymerisaten mit Polycarbonaten sind in (1) und (2) beschrieben. Diese bekannten Formmassen besitzen im allgemeinen zufriedenstellende Eigenschaften. Die 2stufige Pfropfung von ASA-Polymerisaten ist aus (3) bekannt und in (5) sind Mischungen aus ASA-Polymerisaten, die eine 2stufige Pfropfhülle aufweisen, und Polycarbonaten beschrieben. Die in (4) beschriebene Masse aus PC und ASA weist zusätzlich ein Acrylatcopolymerisat auf.

Häufig wird eine höhere Zähigkeit und eine bessere, homogenere Verteilung der Weichphase, verbunden mit einer Verfestigung von Bindenähten bei aus diesen Massen hergestellten Formteilen verlangt. So weisen die z.B. aus (4) oder (5) bekannten Formmassen eine ungenügende Zähigkeit in der Kälte, insbesondere eine unzureichende multiaxiale Schlagzähigkeit auf.

Die aus (1) oder (2) bekannten Formmassen auf Basis von PC und ABS zeigen eine nicht-homogene Verteilung der Weichphase und keine festen Bindenähte, bei insgesamt niedriger multiaxialer Schlagzähigkeit; sie besitzen ferner keine flammhemmenden, selbstverlöschenden Eigenschaften.

Die Flammfestausrüstung thermoplastischer Kunststoffe mit Halogen enthaltenden organischen Verbindungen zusammen mit Metall oder Nichtmetall enthaltenden Verbindungen (Synergisten) ist an sich bekannt und z.B. in Vogel, «Flammfestmachen von Kunststoffen», Hüthig-Verlag (1966), Seiten 94 bis 102; Troitzsch, «Brandverhalten von Kunststoffen», Hanser-Verlag (1982), Seiten 1 bis 65 und Hirschler, «Developments in Polymer Stabilization», Band 5, Editor G. Scott, Applied Science Publishers, London (1982), Seiten 107 bis 151, beschrieben. Es ist ferner bekannt, dass auch Blends bestehend aus Poly(carbonaten) und schlagzäh modifizierten Styrolcopolymeren in dieser Weise flammfest ausgerüstet werden können (vgl. DE-OS 3 002 662). Die Erfahrung lehrt jedoch, dass die üblicherweise eingesetzten Blends gemäss (1) bis (6) zwar flammhemmend ausgerüstet werden können, dass dann aber die mechanischen und thermischen Eigenschaften der Blends darunter in nicht tolerierbarem Masse leiden.

Es bestand daher die Aufgabe Formmassen vorzuschlagen, die ausser einem guten mechanischen und thermischen Eigenschaftsprofil auch noch selbstverlöschende Eigenschaften besitzen.

Diese Aufgabe wird durch die im Patentanspruch 1 beschriebene Formmasse gelöst.

Die Erfindung betrifft daher eine selbstverlöschende thermoplastische Formmasse, enthaltend

A) 10 bis 90 Gew.-Teile mindestens eines Polycarbonates
und

B) 90 bis 10 Gew.-Teile mindestens eines Pfropfmischpolymerisates einer mittleren Teilchengrösse im Bereich von 200 bis 700 nm ($d_{50}$-Wert der integralen Masseverteilung),
das besteht aus

$b_1$) mindestens einem Elastomeren (Kautschuk), das 10 bis 80 Gew.-%, bezogen auf B), ausmacht, wobei das Elastomere $b_1$) einpolymerisiert enthält,

$b_1a_1$) 35 bis 100 Gew.-% mindestens eines Diens aus der Gruppe der konjugierten Diene mit 4 oder 5 C-Atomen,

$b_1a_2$) 0 bis 65 Gew.-% mindestens eines Monomeren aus der Gruppe der Alkylacrylate oder Alkylmethacrylate mit 1 bis 8 C-Atomen im Alkylrest, bezogen auf $b_1$),
und

$b_2$) einer auf das Elastomere gepfropften Hülle, die 90 bis 20 Gew.-%, bezogen auf B), ausmacht, und die in an sich bekannter Weise durch sukzessive Polymerisation der die Hülle aufbauenden Pfopfmonomeren in zwei Verfahrensschritten in Gegenwart des Elastomeren $b_1$) erhalten wird, mit der Massgabe, dass die Pfropfhülle einpolymerisiert enthält, bezogen auf $b_2$),
im ersten Verfahrensschritt

$b_2a_1$) 10 bis 90 Gew.-% eines Gemisches aus mindestens einem vinylaromatischen Kohlenwasserstoff ($b_2a_1\alpha$) und mindestens einem davon verschiedenen ethylenisch ungesättigten Monomeren ($b_2a_1\beta$) in einem Gewichtsverhältnis ($b_2a_1\alpha$)/($b_2a_1\beta$) von 90 zu 10 bis 60 zu 40
und
im zweiten Verfahrensschritt

$b_2a_2$) 90 bis 10 Gew.-% mindestens eines Monomeren aus der Gruppe der Alkylacrylate oder der Alkylmethacrylate mit 1 bis 8 C-Atomen im Alkylrest.

Die Formmasse ist dadurch gekennzeichnet, dass sie, jeweils bezogen auf 100 Gew.-Teile A+B, 1 bis 50 Gew.-Teile einer Halogen enthaltenden organischen Verbindung als Flammschutzmittel (Komponente C) und D) 0,1 bis 20 Gew.-Teile einer Metall oder Nichtmetall enthaltenden Verbindung (Synergist) aufweist.

Nachstehend wird der Aufbau der Formmasse aus den Komponenten A) bis D) beschrieben:

Die erfindungsgemässe Formmasse enthält die Komponenten A) und B) jeweils in einem Anteil von 10 bis 90 Gew.-Teilen, vorzugsweise von 30 bis 90 Gew.-Teilen, jeweils bezogen auf die Formmasse aus A+B, wobei sich beide Komponenten zu 100 ergänzen.

Die Komponente B) der Formmasse enthält mindestens ein Pfropfmischpolymerisat, das aus mindestens einem Elastomeren $b_1$) in einem Anteil von 10 bis 80 Gew.-%, vorzugsweise von 30 bis 70 Gew.-% und insbesondere von 40 bis 65 Gew.-%, jeweils bezogen auf B), aufgebaut ist.

Ferner enthält das Pfropfmischpolymerisat mindestens eine Pfropfhülle $b_2$) in einem Anteil von 90 bis 20 Gew.-%, vorzugsweise von 70 bis 30 Gew.-% und insbesondere von 55 bis 40 Gew.-%, jeweils bezogen auf B). Vorzugsweise besteht das Pfropfmischpolymerisat aus $b_1$) und $b_2$) ($\Sigma$ = 100).

Das Pfropfmischpolymerisat ist erhältlich bzw. wird erhalten durch sukzessive Polymerisation (darunter ist die nacheinanderfolgende Polymerisation zu verstehen, wobei die Monomeren der 1. Stufe bis praktisch zum vollständigen Umsatz einpolymerisiert werden, bevor neues Monomere zugegeben wird) unterschiedlicher Monomerer, oder von Gemischen von Polymeren, in zwei Verfahrensschritten in Gegenwart des Elastomeren $b_1$) in Emulsion, wobei die Teilchen des erhaltenen Latex in an sich bekannter Weise, z. B. durch Agglomeration auf den gewünschten Teilchengrössenbereich innerhalb des genannten Bereiches von 200 bis 700 nm ($d_{50}$-Wert der integralen Masseverteilung) eingestellt werden können, bevor die Pfropfung erfolgt. Die Pfropfung wird so durchgeführt, dass in der ersten Verfahrensstufe 10 bis 90 Gew.-%, vorzugsweise 50 bis 75 Gew.-% und insbesondere 55 bis 70 Gew.-%, jeweils bezogen auf $b_2$), an- bzw. aufpolymerisiert werden. In der zweiten Verfahrensstufe werden 90 bis 10 Gew.-%, vorzugsweise 50 bis 25 Gew.-% und insbesondere 45 bis 30 Gew.-% anpolymerisiert.

D. h. die Pfropfhülle enthält die in den beiden Verfahrensstufen verwendeten Monomeren in den genannten Mengen einpolymerisiert.

Bezogen auf 100 Gew.-Teile A)+B) enthält die erfindungsgemässe Formmasse desweiteren 1 bis 50 Gew.-Teile, insbesondere 2 bis 30 Gew.-Teile, vorzugsweise 3 bis 25 Gew.-Teile, mindestens einer Halogen enthaltenden organischen Verbindung C als Flammschutzmittel und ferner 0,5 bis 20 Gew.-Teile, insbesondere 1 bis 15 Gew.-Teile und vorzugsweise 1,2 bis 12 Gew.-Teile, mindestens einer Metall oder Nichtmetall enthaltenden Verbindung D als Synergisten. Die erfindungsgemässe Formmasse besteht vorzugsweise aus den genannten 4 Komponenten. Sie kann jedoch, dies wird insbesondere bei der Verarbeitung der Fall sein, übliche Zusatzstoffe in üblichen Mengen aufweisen.

Die für die Herstellung der erfindungsgemässen Formmassen verwendeten Komponenten A) bis D) sind im Prinzip bekannt. Neu und erfinderisch ist, dass durch die Kombination von Polycarbonat mit einem zweifach gepfropften Dienkautschuk (als Schlagzähmodifier für die Komponente B) und mit Flammschutzmittel (Komponente C) sowie Synergisten (Komponente D) Formmassen mit einem ausgeglichenen Eigenschaftsprofil erhalten werden, während Formmassen mit in üblicher Weise schlagzäh modifizierter Komponente B) bei der Zugabe der Komponenten C) und D) zwar die Eigenschaft der Selbstverlöschung aufweisen, wobei aber das thermische und mechanische Eigenschaftsprofil in überproportionaler Weise geschädigt wird.

Komponente A

Unter Polycarbonaten A) im Sinne der erfindungsgemässen Formmasse sollen Polycarbonate auf der Basis von Homopolycarbonaten und Copolycarbonaten verstanden werden. Als Bisphenole kommen dabei beispielsweise in Frage: Dihydroxydiphenyle, Bis-(hydroxyphenyl)alkane, Bis-(hydroxyphenyl)ether. Es können aber auch alle anderen, für die Herstellung von Polycarbonaten geeigneten Bisphenole eingesetzt werden, wie sie u. a. in der Monographie H. Schnell, Chemistry and Physiks auf Polycarbonates, Interscience Publishers, New York, 1964, in der US-PS 2 999 835 und in der DE-OS 2 248 817 beschrieben sind. Besonders bevorzugt sind Polycarbonate auf der Basis von 2,2-Bis-(4-hydroxyphenyl)propan. Die Synthese der Polycarbonate wird beispielsweise in der US-PS 2 999 835 und der GB-PS 772 627 beschrieben. Die Komponente A weist relative Viskositäten $\eta_{spec}/c$ im Bereich von 1,1 bis 1,5 [ml/g] auf, entsprechend mittleren Molgewichten $\bar{M}_n$ im Bereich von 25.000 bis 200.000.

Komponente B

Die Komponente B (Pfropfmischpolymerisat oder Weichphase) der erfindungsgemässen Formmasse ist in der Komponente A, die als Hartmatrix fungiert, dispergiert in Form von Teilchen im Bereich von 200 bis 700 nm (mittlere Teilchengrösse, $d_{50}$-Wert der integralen Masseverteilung).

Die Komponente B besteht aus 2 Teilen, nämlich mindestens einem Elastomeren (Kautschuk) $b_1$), das eine Einfriertemperatur von weniger als 0 °C, vorzugsweise von weniger als –50 °C aufweist. Dieses Elastomere ist vorzugsweise aus Homo- oder Copolymerisaten konjugierter Diene $b_1a_1$) mit 4 bis 5 C-Atomen, insbesondere 1,3-Butadien und Isopren aufgebaut, bzw. besteht aus diesen. Vorzugsweise handelt es sich um Polybutadien als Elastomeres. Das Elastomere kann jedoch als Comonomere $b_1a_2$) bis zu 65 Gew.-%, vorzugsweise 10 bis 60 Gew.-%, jeweils bezogen auf $b_1$) mindestens eines weiteren Monomeren aus der Gruppe der Alkylacrylate und Alkylmethacrylate mit 1 bis 8 C-Atomen im Alkylrest einpolymerisiert enthalten. Bevorzugt werden die Alkylacrylate und hiervon insbesondere das N-Butylacrylat und das 2-Ethylhexylacrylat bzw. deren Gemische.

Die Herstellung der einzusetzenden Komponente B kann beispielsweise nach der in der DE-PS 1 260 135 beschriebenen Methode erfolgen.

Herstellung des Elastomeren $b_1$

Das Elastomere, die Pfropfgrundlage $b_1$), wird hergestellt, indem die konjugierten Diene $b_1a_1$) allein, gegebenenfalls zusammen mit den weiteren Comonomeren $b_1a_2$), in wässriger Emulsion in an und für sich bekannter Weise bei Temperaturen von 20 bis 100°C, vorzugsweise von 50 bis 80°C polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natriumsalze von Alkylsulfonaten oder Fettsäuren mit 10 bis 18 Kohlenstoffatomen. Es ist günstig, die Emulgatoren in Mengen von 0,5 bis 5 Gew.-%, insbesondere von 1 bis 2 Gew.-%, bezogen auf die bei der Herstellung der Pfropfgrundlage ($b_1$) eingesetzten Monomeren, einzusetzen. Im allgemeinen wird bei einem Wasser- zu Monomeren-Verhältnis von 2:1 bis 0,7:1 gearbeitet. Als Polymerisationsinitiatoren dienen insbesondere die gebräuchlichen Persulfate, wie Kaliumpersulfat, es können jedoch auch Redox-Systeme zum Einsatz gelangen. Die Initiatoren werden im allgemeinen in Mengen von 0,1 bis 1 Gew.-%, bezogen auf die bei der Herstellung der Pfropfgrundlage ($b_1$) eingesetzten Monomeren, eingesetzt. Als weitere Polymerisationshilfsstoffe können die üblichen Puffersubstanzen, durch welche pH-Werte von vorzugsweise 6 bis 9 eingestellt werden – z.B. Natriumbicarbonat und Natriumpyrophosphat; ferner werden 0,1 bis 3 Gew.-% eines Molekulargewichtsreglers – wie Mercaptane, Terpinole oder dimeres $\alpha$-Methylstyrol – bei der Polymerisation verwendet werden.

Die genauen Polymerisationsbedingungen, insbesondere Art, Dosierung und Menge des Emulgators, werden innerhalb der oben angegebenen Bereiche im einzelnen so gewählt, dass der erhaltene Latex des Polymerisats $b_1$ einen $d_{50}$-Wert im Bereich von etwa 200 bis 700 nm, vorzugsweise im Bereich von 250 bis 600 nm besitzt. Oder aber das Emulsionspolymerisat, mit mittleren Teilchengrössen im Bereich von 60 bis 150 nm wird in bekannter Weise agglomeriert (vgl. DE-AS 2 427 960).

Herstellung der Pfropfhülle $b_2$)

Die Pfropfhülle, Komponente $b_2$, ist 2stufig aufgebaut und wird durch sukzessive Polymerisation der Monomeren $b_2a_1$) und $b_2a_2$) in 2 Verfahrensschritten in Gegenwart des Latex des Elastomeren $b_1$) erzeugt. Zu ihrer Herstellung wird zunächst mindestens ein vinylaromatischer Kohlenwasserstoff mit bis zu 12 C-Atomen ($b_2a_1\alpha$) im Gemisch mit mindestens einem davon verschiedenen ethylenisch ungesättigten Monomeren ($b_2a_1\beta$) verwendet. Das Verhältnis der einpolymerisierten Monomeren ($b_2a_1\alpha$)/($b_2a_1\beta$) in dem in der ersten Verfahrensstufe erzeugten Copolymerisat (Pfropfast!) soll 90 zu 10 bis 10 zu 90, vorzugsweise 60 zu 40 bis 20 zu 80 betragen. Dem Fachmann ist bekannt, wie er dieses Ziel erreicht (Vorlage der Monomeren, Zugabe während der Polymerisation und dgl.).

Beispiele für Monomeren ($b_2a_1\alpha$) sind Styrol, $\alpha$-Methylstyrol und kernalkylierte Styrole, wie p-Methylstyrol und tert.-Butylstyrol. Besonders bevorzugt werden Styrol, $\alpha$-Methylstyrol und p-Methylstyrol eingesetzt.

Beispiele für davon verschiedene copolymerisierbare, ethylenisch ungesättigte Monomeren ($b_2a_1\beta$) sind Acrylnitril, Acrylsäure, Maleinsäureanhydrid, Acrylamid und/oder Vinylmethylether zu nennen. Besonders bevorzugt wird Acrylnitril. Als besonders bevorzugte Monomeren-Gemische für die Durchführung der 1. Verfahrensstufe der Pfropfung werden vor allem Styrol und Acrylnitril, $\alpha$-Methylstyrol oder p-Methylstyrol und Acrylnitril, sowie Styrol, $\alpha$-Methylstyrol und Acrylnitril eingesetzt.

Es ist vorteilhaft, die Pfropfmischpolymerisation des Gemisches der Monomeren ($b_2a_1\alpha$) und ($b_2a_1\beta$) auf das als Pfropfgrundlage dienende Elastomeren $b_1$) in wässriger Emulsion unter den üblichen, vorstehend aufgeführten Bedingungen durchzuführen. Die Pfropfmischpolymerisation kann zweckmässig im gleichen System erfolgen wie die Emulsionspolymerisation zur Herstellung der Pfropfgrundlage $b_1$), wobei, falls notwendig, weiterer Emulgator und Initiator zugegeben werden kann. Das aufzupfropfende Monomerengemisch kann dem Reaktionsgemisch, nur jeweils bezogen auf die betreffende Verfahrensstufe, auf einmal, absatzweise in mehreren Stufen oder vorzugsweise kontinuierlich während der Polymerisation zugegeben werden. Die Pfropfmischpolymerisation in Gegenwart des Elastomeren wird so geführt, dass ein Pfropfgrad von 2,5 bis 50, vorzugsweise von 10 bis 40, bezogen auf die 1. Verfahrensstufe, im Pfropfmischpolymerisat resultiert.

Unter Pfropfgrad (PG) versteht man das Verhältnis der Pfropfmonomeren zum Pfropfkautschuk in Gewichtsteilen multipliziert mit dem Faktor 100

$$PG = \frac{\text{Pfropfmonomeren}}{\text{Pfropfkautschuk}} \cdot 100$$

wobei für die erste Pfropfstufe gilt:

$$\frac{b_2a_1}{b_1 + b_2a_1}$$

und für die zweite Pfropfstufe:

$$\frac{b_2a_2}{b_1 + b_2a_1 + b_2a_2}$$

Danach wird im zweiten Verfahrensschritt mindestens ein Monomeres $b_2a_2$) aus der Gruppe der Alkylmethacrylate oder der Alkylacrylate mit 1 bis 8 C-Atomen im Alkylrest an- und somit einpolymerisiert. Bevorzugt werden nur die Alkylmethacrylate und von diesen insbesondere das Methylmethacrylat einpolymerisiert.

Auch der zweite Verfahrensschritt der Pfropfmischpolymerisation wird zweckmässigerweise im gleichen System durchgeführt. Dabei kann, falls notwendig, weiterer Emulgator und Initiator zugegeben werden. Das aufzupfropfende Monomere, bevorzugt wird MMA, kann dem Reaktionsgemisch auf einmal, absatzweise in mehreren Schritten oder vorzugsweise kontinuierlich während der Polymerisation zugegeben werden. Die Pfropfmischpolymerisation in Gegenwart des bereits gepfropften Latex des Elastomeren $b_1$) wird so aufgeführt, dass ein Pfropfgrad von 5 bis 50, vorzugsweise von 10 bis 40, resultiert. Das Pfropfmischpolymerisat B) soll mittlere Teilchengrössen von 50 bis 700 nm ($d_{50}$-Wert) insbesondere von 200 bis 500 besitzen. Die Bedingungen der Pfropfmischpolymerisation sind so zu wählen, dass Teilchengrössen in diesem Bereich resultieren. Massnahmen hierzu sind bekannt und z.B. in der DE-PS 1 260 135 und der DE-OS 2 826 925 sowie in Journal of Applied Polymer Science, Vol. 9 (1965), S. 2929 bis 2938 beschrieben.

Zusätzlich zu dem Pfropfmischpolymerisat ($b_1 + b_2$) enthält die Komponente B) noch einen geringeren Anteil einer nicht-elastomeren Hartkomponente, die bei der Pfropfmischpolymerisation entsteht und aus freien, nicht gepfropften Copolymerisaten oder Homopolymerisaten der Pfropfmonomeren besteht.

Falls gewünscht, insbesondere wenn dies das Eigenschaftsbild erfordert, kann der aus den Komponenten A und B bestehenden erfindungsgemässen Formmasse, noch ein Copolymerisat zugefügt werden. Es kann sich dabei insbesondere um ein (Co)Polymerisat handeln, das insbesondere aus den Monomeren der Pfropfhülle $b_2$) aufgebaut ist und das als Hartmatrix für die Komponente B) fungiert.

Bei dieser zusätzlichen, separat hergestellten Hartkomponente kann es sich z.B. um ein Styrol/Acrylnitril-Copolymerisat, ein α-Methylstyrol/Acrylnitril-Copolymerisat, ein Methylmethacrylat-Polymerisat, ein Styrol/Maleinsäureanhydrid-Copolymerisat oder ein α-Methylstyrol/Styrol/Acrylnitril-, ein Styrol/Acrylnitril/Maleinsäureanhydrid-Terpolymerisat, bzw. ein α-Methylstyrol/Styrol/Acrylnitril-Terpolymerisat handeln. Diese Copolymerisate können einzeln oder auch in Mischung miteinander als teilweiser Ersatz für die Hartkomponente A) eingesetzt werden.

Die zusätzliche, separat hergestellte Hartkomponente kann nach den herkömmlichen Methoden erhalten werden. So kann z.B. die Copolymerisation des Styrols und/oder α-Methylstyrols mit dem Acrylnitril in Masse, Lösung, Suspension oder wässriger Emulsion durchgeführt werden. Die Hartkomponente hat vorzugsweise eine Viskositätszahl von 40 bis 100, insbesondere von 50 bis 80. Die Bestimmung der Viskositätszahl erfolgt analog DIN 53 726; dabei werden 0,5 g Material in 100 ml Dimethylformamid gelöst.

## Komponente C

Bei der Komponente C) der erfindungsgemässen Formmasse handelt es sich um Halogen, vorzugsweise Brom, enthaltende nieder- und hochmolekulare aromatische Verbindungen, ausgewählt aus den Klassen der Aryle, Arylether, Arylalkylether, Arylamine, Arylimide, Arylanhydride, Phenole, Arylalkylimide und Arylsiloxane. Die folgende Zusammenstellung zeigt charakteristische Beispiele; sie beinhaltet keine Einschränkung:

Aryle:
Hexabrombenzol, bromiertes oligomeres Styrol (BOS), Pentabrommethylbenzol;

Arylether:
Dekabromdiphenylether, Oktabromdiphenylether, Poly(2,6-dibrom-1,4-phenylen)ether;
Arylalkylether:
Bis(2,4,6-tribromphenoxi)ethan, Bis(pentabromphenoxi)ethan, Poly(tetrabrombisphenol-A-glycidyl)ether, Poly(tetrabromhydrochinon-1,2-ethyliden)ether;
Arylamine:
Tris(2,4-dibromphenyl)amin, Bis(pentabromphenyl)amin; Tribromanilin;
Arylanhydride:
Tetrabromphthalsäureanhydrid;
Arylimide:
Tetrabromphthalsäureimid;
Arylalkylimide:
Ethylen-bis(tetrabromphthalimid);
Phenole:
Tetrabrombisphenol-A;
Arylsiloxane:
Tetrakis(2,4,6-tribromphenyl)siloxan;
Bromierte Poly(carbonate):
Poly(tetrabrombisphenylen-A)carbonat

Besonders bevorzugt eingesetzt werden:
Octabromdiphenylether, DE 79® von Great Lakes ($C_1$)
Poly(2,6-dibrom-1,4-phenylen)ether, PO 64 P® von Great Lakes ($C_2$)
Poly(tetrabrombisphenol-A-glycidyl)ether, F 2400® von Makhteshim ($C_3$) (Molgewicht 40.000),
Ethylenbis(tetrabromphthalimid), Saytex BT 93® von Saytech ($C_4$) und
Bis(2,4,6-tribromphenoxi)ethan, Firemaster FF 680® von Great Lakes ($C_5$).
Dekabromdiphenylether, DE 83® von Great Lakes ($C_6$)
Poly(tetrabrombisphenylen-A)carbonat, BC 52® von Great Lakes ($C_7$)
Poly(tetrabrombisphenylen-A)carbonat, BC 58® von Great Lakes ($C_8$).
Die Flammschutzmittel werden in Mengen von 1 bis 50 Gew.-Teilen, insbesondere 2 bis 30 Gew.-Teile, vorzugsweise 3 bis 25 Gew.-Teile, jeweils bezogen auf 100 Gew.-Teile A+B, eingesetzt.

## Komponente D

Als Synergisten für die Halogen enthaltenden Flammschutzmittel in den erfindungsgemässen Formmassen kommen vor allem Metallverbindungen wie $As_2O_3$, $Sb_2O_3$, $Bi_2O_3$, $SnO_2$, $Fe_2O_3$, Ferrocen, $Al_2O_3$, ZnO und deren Gemische sowie Nichtmetallverbindungen wie Hypophosphite und Borate in Frage und zwar in Mengen von 0,1 bis 20 Gew.-Teilen, vorzugsweise 1,2 bis 12 Gew.-

Teilen, jeweils bezogen auf A+B. Bevorzugt eingesetzt wird $Sb_2O_3$ ($D_1$).

Komponente E

Die erfindungsgemässe Formmasse kann ferner übliche Zusatzstoffe enthalten (Komponente E). Als Zusatzstoffe kommen bekannte und bewährte Stabilisatoren, wie sterisch gehinderte Phenole und organische Phosphite in Betracht, die in üblichen Mengen von jeweils 0,01 bis 0,5 Gew.-Teilen, bezogen auf 100 Gew.-Teile A+B, angewendet werden.

Ferner können Schwefel und/oder Schwefel enthaltende Antioxidantien wie Dithiocarbamatkomplexe, Xanthogensäuresalze, Thiazole und Zinksalze von Mercaptobenzimidazolen in üblichen Mengen von jeweils 0,01 bis 0,5 Gew.-Teilen, bezogen auf 100 Gew.-Teile A+B, eingesetzt werden.

Ferner sind anwendbar Füllstoffe, Farbpigmente, Gleitmittel, Weichmacher, Antistatika oder Treibmittel, weitere metallfreie Synergisten, wie Triphenylphosphat, Triphenylphosphinoxid in üblichen, dem Fachmann bekannten Mengen.

Besonders bevorzugt eingesetzt werden Phthalsäureester, wie Pluriol PE 3100® ($E_1$) und Tris(nonylphenyl)phosphit (TNPP) ($E_2$).

Herstellung der erfindungsgemässen Formmasse

Das Mischen der Komponenten A), B), C), D) und gegebenenfalls E) der erfindungsgemässen Formmasse kann nach allen bekannten Methoden erfolgen. Vorzugsweise geschieht jedoch das Mischen der Komponenten A), B), C), D) und gegebenenfalls E) durch gemeinsames Extrudieren, Kneten oder Verwalzen der Komponenten, wobei die Komponenten notwendigenfalls zuvor aus der bei der Polymerisation erhaltenen Lösung oder aus der wässrigen Dispersion isoliert worden sind. Die in wässriger Dispersion erhaltenen Produkte der Pfropfmischpolymerisation [Komponente B)] können aber auch teilweise entwässert oder direkt als Dispersion mit dem Polycarbonat A), und den Komponenten C), D) und gegebenenfalls E) vermischt werden, wobei dann während des Vermischens die vollständige Trocknung des Pfropfmischpolymerisats erfolgt.

Eine bevorzugte Herstellung der erfindungsgemässen Formmasse erfolgt z.B. dadurch, dass eine Schmelze des Polycarbonates [Komponente A)] mit dem Pfropfmischpolymerisat $b_1 + b_2$ bei Temperaturen über 200°C intensiv vermischt wird. Sie kann auch dadurch erfolgen, dass man eine Schmelze der Polymerisate A) mit einem gefällten Pfropfmischpolymerisat $b_1 + b_2$, das einen Restwassergehalt von 10 bis 40 Gew.-% aufweist, bei Temperaturen über 180°C intensiv vermischt, oder dass man die Schmelze mit einer Dispersion der Pfropfkautschuks $b_1 + b_2$, die ein Feststoffgehalt von 40 bis 70 Gew.-% aufweist, bei Temperaturen über 180°C intensiv vermischt und wobei jeweils anschliessend die Komponenten C), D) und gegebenenfalls E) beigegeben werden.

Die erfindungsgemässe Formmasse kann nach den bekannten Verfahren der Thermoplastverarbeitung bearbeitet werden, also z.B. durch Extrudieren, Spritzgiessen, Kalandrieren, Hohlkörperblasen, Pressen oder Sintern; besonders bevorzugt werden aus den nach dem erfindungsgemässen Verfahren hergestellten Formmassen Formteile durch Spritzgiessen für den Automobilbau hergestellt.

Es hat sich überraschenderweise gezeigt, dass die erfindungsgemässe Formmasse zusätzlich zu guten Verarbeitungseigenschaften ausgezeichnete Kerbschlagzähigkeiten und eine gute Festigkeit bei der multiaxialen Schlagbeanspruchung (Fallrohrtest), eine hohe Wärmeformbeständigkeit und selbstverlöschende Eigenschaften aufweist.

Es zeigt sich auch, dass die Schlagzähigkeit nach Bewitterung auf einem hohen Endniveau verbleibt und die Formmassen danach trotz Bewitterungsschädigung keinen Bruch aufweisen.

Die in der vorliegenden Anmeldung beschriebenen Parameter wurden wie folgt bestimmt:

1. Die mittlere Teilchengrösse und die Teilchengrössenverteilung wurde aus der integralen Massenverteilung bestimmt. Bei den mittleren Teilchengrössen handelt es sich in allen Fällen um das Gewichtsmittel der Teilchengrössen, wie sie mittels einer analytischen Ultrazentrifuge entsprechend der Methode von W. Scholtan und H. Lange, Koloid-Z, und Z.-Polymere 250 (1972), Seiten 82 bis 796, bestimmt wurden. Die Ultrazentrifugenmessung liefert die integrale Massenverteilung des Teilchendurchmessers einer Probe. Hieraus lässt sich entnehmen, wieviel Gewichtsprozent der Teilchen einen Durchmesser gleich oder kleiner einer bestimmten Grösse haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen grösseren Durchmesser als der $d_{50}$-Wert. Zur Charakterisierung der Breite der Teilchengrössenverteilung der Kautschukteilchen werden neben dem $d_{50}$-Wert (mittlerer Teilchendurchmesser), die sich aus der integralen Massenverteilung ergeben den $d_{10}$- und $d_{90}$-Werte herangezogen. Der $d_{10}$- bzw. $d_{90}$-Wert der integralen Massenverteilung ist dabei entsprechend dem $d_{50}$-Werte definiert mit dem Unterschied, dass sie auf 10 bzw. 90 Gew.-% der Teilchen bezogen sind. Der Quotient

$$\frac{d_{90} - d_{10}}{d_{50}} = Q$$

stellt ein Mass für die Verteilungsbreite der Teilchengrösse dar.

2. Die Kerbschlagzähigkeit $a_k$ in [kJ/m²] der Produkte wurde nach DIN 53 453 an bei 250°C gespritzten Normkleinstäben bei 23°C gemessen. Die Schlagzähigkeiten der Versuche und Beispiele sind in der Tabelle zusammengefasst.

3. Die Bruchenergie $E_{Br}$ in [Nm] wurde mit Hilfe des Fallrohrtestes nach DIN 53 443 an bei 250 °C gespritzten Rundscheiben bei 23 °C bestimmt.

4. Die Molgewichtsbestimmung der Polycarbonate erfolgt auf Grund der Messung der relativen Viskosität in 0,5%iger Methylenchloridlösung bei 23 °C.

5. Die Wärmeformbeständigkeit nach Vicat [in °C] wurde gemäss DIN 53 460 bestimmt.

6. Die Flammschutzprüfung erfolgt im vertikalen Brandtest nach den Vorschriften der Underwriter Laboratories zwecks Einordnung in eine der Brandklassen UL94 V0, 94 V1 oder 94 V2.

Die Einstufung eines flammgeschützten Thermoplasten in die Brandklasse UL94 V0, erfolgt, wenn folgende Kriterien erfüllt sind: Bei einem Satz von 5 Proben der Abmessungen 127 × 12,7 × 3,16 mm dürfen alle Proben nach zweimaliger Beflammung 10 sek Zeitdauer mit einer offenen Flamme (Höhe 19 mm) nicht länger als 10 sek nachbrennen. Die Summe der Nachbrennzeiten bei 10 Beflammungen von 5 Proben darf nicht grösser sein als 50 sek. Es darf kein brennendes Abtropfen, vollständiges Abbrennen oder ein Nachglühen von länger als 30 sek erfolgen. Die Einstufung in die Brandklasse UL94 V1 erfordert, dass die Nachbrennzeiten nicht länger als 30 sek sind und dass die Summe der Nachbrennzeiten von 10 Beflammungen von 5 Proben nicht grösser als 250 sek ist. Das Nachglühen darf nie länger als 60 sek dauern. Die übrigen Kriterien sind identisch mit den oben erwähnten. Eine Einstufung in die Brandklasse UL94 V2 erfolgt dann, wenn es bei Erfüllung der übrigen Kriterien zur Einstufung UL94 V1 zu brennendem Abtropfen kommt.

Zur Durchführung der in den Beispielen beschriebenen Versuche und von Vergleichsversuchen wurden die nachfolgend beschriebenen Produkte hergestellt.

I. Als Komponente A) wurde ein Polycarbonat auf der Basis von 2,2-Bis-(4-hydroxiphenyl)propan mit einer Grenzviskosität von 0,55 [dl/g] eingesetzt.

II. Herstellung von Pfropfmischpolymerisaten $B_1$–$B_7$
a) Herstellung der Pfropfmischpolymerisate $B_3$–$B_7$ mit zweistufiger Pfropfhülle.

Durch Polymerisation von 60 Teilen Butadien in Gegenwart einer Lösung von 0,5 Teilen tert.-Dodecylmercaptan, 0,7 Teilen Kalium-$C_{14}$-$C_{18}$-Alkylsulfonat als Emulgator, 0,2 Teilen Kaliumperoxidisulfat und 0,2 Teilen Natriumpyrophosphat in 80 Teilen Wasser wird bei 65 °C ein Polybutadienlatex hergestellt. Nach Beendigung der Polymerisation wird der Polymerisationsautoklav entspannt. Der Umsatz betrug 98%.

Es wurde ein Polybutadienlatex erhalten, dessen mittlere Teilchengrösse bei 0,1 µm liegt. Dieser Latex wird durch Zusatz von 25 Teilen einer Emulsion, eines Copolymeren aus 96 Teilen Ethylacrylat und 4 Teilen Acrylsäureamid mit einem Feststoffgehalt von 10 Gew.-% agglomeriert, wobei ein Polybutadienlatex mit einer mittleren Teilchengrösse von 0,3 bis 0,4 µm entstand.

140 Teile des erhaltenen Polybutadien-Latices wurden mit der in der Tabelle 1 unter $b_2a_1$ angegebenen Menge einer Mischung aus Styrol und Acrylnitril (Verhältnis 70:30) und 50 Teilen Wasser gemischt und unter Rühren nach Zusatz von weiteren 0,08 Teilen Kaliumpersulfat und 0.05 Teilen Lauroylperoxid 3 Stunden auf 65 °C erhitzt. Nach Beendigung der ersten Stufe der Pfropfpolymerisation wurde ohne weitere Zusatzstoffe die in Tabelle 1 unter $b_2a_2$ angegebene Menge Methylmethacrylat während 2 Stunden zugegeben. Die Temperatur betrug während des Zulaufs 65 °C.

Nach Beendigung der Pfropfpolymerisation wurde das Produkt mittels Calciumchloridlösung bei 95 °C aus der Dispersion gefällt, mit Wasser gewaschen und im warmen Luftstrom getrocknet.

b) Herstellung der Pfropfmischpolymerisate $B_1$ und $B_2$ mit einstufiger Hülle (für Vergleichsversuche)

140 Teile des erhaltenen Polybutadienlatices wurden mit der in der Tabelle 1 unter $b_2a_1$ angegebenen Menge einer Mischung aus Styrol und Acrylnitril (Verhältnis 70:30) und 50 Teilen Wasser gemischt und unter Rühren nach Zusatz von weiteren 0,08 Teilen Kaliumpersulfat und 0,05 Teilen Lauroylperoxid 3 Stunden auf 65 °C erhitzt. Danach wurde das Produkt mittels Calciumchloridlösung bei 95 °C aus der Dispersion gefällt, mit Wasser gewaschen und im warmen Luftstrom getrocknet.

Tabelle 1:
Zusammensetzung der Pfropfmischpolymerisate $B_1$ bis $B_7$

|  | $b_1$ Teile | $b_2a_1$ Teile | $b_2a_2$ Teile |
|---|---|---|---|
| B1 | 60 | 40 | – |
| B2 | 60 | 60 | – |
| B3 | 60 | 35 | 5 |
| B4 | 60 | 30 | 10 |
| B5 | 60 | 20 | 20 |
| B6 | 60 | 24 | 36 |
| B7 | 60 | 36 | 24 |

III. Als Komponenten C, D und F wurden die in der Beschreibung genannten Produkte $C_1$–$C_8$, $D_1$, $F_1$ und $F_2$ angewendet.

Die Erfindung wird nachstehend anhand von Beispielen und Vergleichsversuchen näher erläutert. Die in den Beispielen genannten Mengenangaben in Gew.-Teilen beziehen sich jeweils auf die gesamte Formmasse.

Beispiele 1 bis 15 und Vergleichsversuche A bis P Die in der Tabelle angegebenen Teile der Komponenten A) bis E) werden auf einem Mischextruder bei 260 °C aufgeschmolzen, gemischt und anschliessend granuliert.

Aus den Mischungen wurden bei 250 °C mittels einer Spritzgussmaschine Prüfkörper hergestellt, an denen die in der Tabelle genannten Prüfungen durchgeführt wurden.

Tabelle 2: Beispiele und Vergleichsversuche

| Beispiel (erf. gem.) Nr. | Zusammensetzung der Formmasse in Gew.-% | | | Komponenten | | | UL 94 | | Vicat | $a_k$ | $E_{Br}$ |
|---|---|---|---|---|---|---|---|---|---|---|---|
| | Komponente und Verhältnis | | | | | | | | | | |
| | A + B | (A : B) | C | D | $E_1$ | $E_2$ | ⅛" | ⅟₁₆" | [°C] | [kJ/m²] | [Nm] |
| 1 | A + B$_3$, 87,7 | (60 : 40) | C$_6$, 7,6 | D$_1$, 4 | 0,5 | 0,2 | V0 | V0 | 119 | 30 | 52 |
| 2 | A + B$_3$, 86,7 | (60 : 40) | C$_1$, 8,6 | D$_1$, 4 | 0,5 | 0,2 | V0 | V0 | 117 | 28 | 38 |
| 3 | A + B$_4$, 88 | (60 : 40) | C$_4$, 6,8 | D$_1$, 4,5 | 0,5 | 0,2 | V0 | V0 | 122 | 15 | 28 |
| 4 | A + B$_5$, 87,3 | (60 : 40) | C$_2$, 8 | D$_1$, 4 | 0,5 | 0,2 | V0 | V0 | 125 | 28 | 48 |
| 5 | A + B$_5$, 87,3 | (60 : 40) | C$_5$, 8,1 | D$_1$, 3,9 | 0,5 | 0,2 | V0 | V1 | 111 | 23 | 37 |
| 6 | A + B$_5$, 83,6 | (60 : 40) | C$_3$, 11 | D$_1$, 4,7 | 0,5 | 0,2 | V0 | V0 | 127 | 35 | 57 |
| 7 | A + B$_6$, 84,1 | (60 : 40) | C$_3$, 10,5 | D$_1$, 4,7 | 0,5 | 0,2 | V0 | V1 | 126 | 34 | 53 |
| 8 | A + B$_6$, 83,2 | (60 : 40) | C$_3$, 11,3 | D$_1$, 4,8 | 0,5 | 0,2 | V0 | V0 | 126 | 33 | 54 |
| 9 | A + B$_6$, 87,7 | (60 : 40) | C$_6$, 7,4 | D$_1$, 4,2 | 0,5 | 0,2 | V0 | V0 | 118 | 29 | 47 |
| 10 | A + B$_6$, 88,3 | (60 : 40) | C$_4$, 7 | D$_1$, 4 | 0,5 | 0,2 | V0 | V0 | 121 | 17 | 26 |
| 11 | A + B$_6$, 86,7 | (60 : 40) | C$_2$, 8,5 | D$_1$, 4,1 | 0,5 | 0,2 | V0 | V0 | 124 | 20 | 49 |
| 12 | A + B$_7$, 82,2 | (60 : 40) | C$_3$, 12 | D$_1$, 5,1 | 0,5 | 0,2 | V0 | V0 | 128 | 33 | 56 |
| 13 | A + B$_7$, 87,4 | (60 : 40) | C$_2$, 8 | D$_1$, 3,9 | 0,5 | 0,2 | V0 | V0 | 125 | 26 | 39 |
| 14 | A + B$_7$, 86,6 | (60 : 40) | C$_1$, 8,5 | D$_1$, 4,2 | 0,5 | 0,2 | V0 | V0 | 116 | 27 | 32 |
| 15 | A + B$_7$, 85,6 | (60 : 40) | C$_5$, 9,6 | D$_1$, 4,1 | 0,5 | 0,2 | V0 | V0 | 112 | 24 | 23 |
| 16 | A + B$_7$, 83,2 | (60 : 40) | C$_7$, 11,5 | D$_1$, 4,6 | 0,5 | 0,2 | V0 | V0 | 126 | 19 | 45 |
| 17 | A + B$_7$, 85 | (60 : 40) | C$_8$, 10 | D$_1$, 4,3 | 0,5 | 0,2 | V0 | V0 | 127 | 24 | 46 |

| Vergleichs- versuche | Zusammensetzung der Formmasse in Gew.-% | | | Komponenten | | | UL 94 | | Vicat | $a_k$ | $E_{Br}$ |
|---|---|---|---|---|---|---|---|---|---|---|---|
| | Komponente und Verhältnis | | | | | | | | | | |
| | A + B | (A : B) | C | D | $E_1$ | $E_2$ | ⅛" | ⅟₁₆" | [°C] | [kJ/m²] | [Nm] |
| A | A + B$_1$, 86,7 | (60 : 40) | C$_1$, 8,6 | D$_1$, 4 | 0,5 | 0,2 | V0 | V0 | 112 | 26 | 32 |
| B | A + B$_1$, 87,3 | (60 : 40) | C$_2$, 8 | D$_1$, 4 | 0,5 | 0,2 | V0 | V0 | 119 | 16 | 26 |
| C | A + B$_1$, 83,7 | (60 : 40) | C$_3$, 11 | D$_1$, 4,6 | 0,5 | 0,2 | V0 | V0 | 121 | 29 | 41 |
| D | A + B$_1$, 88 | (60 : 40) | C$_4$, 6,8 | D$_1$, 4,5 | 0,5 | 0,2 | V0 | V0 | 118 | 12 | 25 |
| E | A + B$_1$, 85,6 | (60 : 40) | C$_5$, 9,6 | D$_1$, 4,1 | 0,5 | 0,2 | V0 | V2 | 105 | 24 | 21 |
| F | A + B$_1$, 87,7 | (60 : 40) | C$_6$, 7,6 | D$_1$, 4 | 0,5 | 0,2 | V0 | V0 | 115 | 19 | 28 |
| G | A + B$_1$, 83,2 | (60 : 40) | C$_7$, 11,5 | D$_1$, 4,6 | 0,5 | 0,2 | V0 | V0 | 120 | 10 | 40 |
| H | A + B$_1$, 85 | (60 : 40) | C$_8$, 10 | D$_1$, 4,3 | 0,5 | 0,2 | V0 | V0 | 121 | 17 | 38 |
| I | A + B$_2$, 86,7 | (60 : 40) | C$_1$, 8,6 | D$_1$, 4 | 0,5 | 0,2 | V0 | V0 | 113 | 24 | 33 |
| J | A + B$_2$, 87,3 | (60 : 40) | C$_2$, 8 | D$_1$, 4 | 0,5 | 0,2 | V0 | V0 | 120 | 15 | 23 |
| K | A + B$_2$, 83,7 | (60 : 40) | C$_3$, 11 | D$_1$, 4,6 | 0,5 | 0,2 | V0 | V0 | 122 | 26 | 39 |
| L | A + B$_2$, 88 | (60 : 40) | C$_4$, 6,8 | D$_1$, 4,5 | 0,5 | 0,2 | V0 | V1 | 119 | 11 | 18 |
| M | A + B$_2$, 85,6 | (60 : 40) | C$_5$, 9,6 | D$_1$, 4,1 | 0,5 | 0,2 | V0 | V2 | 103 | 25 | 19 |
| N | A + B$_2$, 87,7 | (60 : 40) | C$_6$, 7,6 | D$_1$, 4 | 0,5 | 0,2 | V0 | V0 | 116 | 17 | 22 |
| O | A + B$_2$, 83,2 | (60 : 40) | C$_7$, 11,5 | D$_1$, 4,6 | 0,5 | 0,2 | V0 | V0 | 121 | 12 | 41 |
| P | A + B$_2$, 85 | (60 : 40) | C$_8$, 10 | D$_1$, 4,3 | 0,5 | 0,2 | V0 | V0 | 123 | 16 | 40 |

EP 0 177 874 B1

**Patentansprüche**

1. Selbstverlöschende thermoplastische Formmasse, enthaltend
A) 10 bis 90 Gew.-Teile mindestens eines Polycarbonates
und
B) 90 bis 10 Gew.-Teile mindestens eines Pfropfmischpolymerisates einer mittleren Teilchengrösse im Bereich von 200 bis 700 nm ($d_{50}$-Wert der integralen Masseverteilung),
das besteht aus
$b_1$) mindestens einem Elastomeren (Kautschuk), das 10 bis 80 Gew.-%, bezogen auf B), ausmacht, wobei das Elastomere $b_1$) einpolymerisiert enthält,
$b_1a_1$) 35 bis 100 Gew.-% mindestens eines Diens aus der Gruppe der konjugierten Diene mit 4 oder 5 C-Atomen,
$b_1a_2$) 0 bis 65 Gew.-% mindestens eines Monomeren aus der Gruppe der Alkylacrylate oder Alkylmethacrylate mit 1 bis 8 C-Atomen im Alkylrest, bezogen auf $b_1$),
und
$b_2$) einer auf das Elastomere gepfropften Hülle, bis 90 bis 20 Gew.-%, bezogen auf B), ausmacht, und die in an sich bekannter Weise durch sukzessive Polymerisation der die Hülle aufbauenden Pfropfmonomeren in zwei Verfahrensschritten in Gegenwart des Elastomeren $b_1$) erhalten wird, mit der Massgabe, dass die Pfropfhülle einpolymerisiert enthält, bezogen auf $b_2$),
im ersten Verfahrensschritt
$b_2a_1$) 10 bis 90 Gew.-% eines Gemisches aus mindestens einem vinylaromatischen Kohlenwasserstoff ($b_2a_1\alpha$) und mindestens einem davon verschiedenen ethylenisch ungesättigten Monomeren ($b_2a_1\beta$) in einem Gewichtsverhältnis ($b_2a_1\alpha$)/($b_2a_1\beta$) von 90 zu 10 bis 60 zu 40
und
im zweiten Verfahrensschritt
$b_2a_2$) 90 bis 10 Gew.-% mindestens eines Monomeren aus der Gruppe der Alkylacrylate oder der Alkylmethacrylate mit 1 bis 8 C-Atomen im Alkylrest,
wobei die Formmasse, jeweils bezogen auf 100 Gew.-Teile A+B,
C) 1 bis 50 Gew.-Teile einer Halogen enthaltenden organischen Verbindung als Flammschutzmittel und
D) 0,1 bis 20 Gew.-Teile einer Metall oder Nichtmetall enthaltenden Verbindung (Synergist) aufweist.

2. Formmasse nach Anspruch 1, bestehend aus den Komponenten A, B, C und D.

3. Formmasse nach Anspruch 1, wobei diese übliche Zusatzstoffe in üblichen Mengen enthält.

4. Selbstverlöschende thermoplastische Formmasse, bestehend aus
A) 30 bis 70 Gew.-Teilen mindestens eines Polycarbonates
und
B) 70 bis 30 Gew.-Teilen mindestens eines Pfropfmischpolymerisates einer mittleren Teilchengrösse im Bereich von 200 bis 700 nm ($d_{50}$-

Wert der integralen Masseverteilung),
das seinerseits besteht aus
$b_1$) mindestens einem Elastomeren (Kautschuk), das 30 bis 70 Gew.-%, bezogen auf B), ausmacht, wobei das Elastomere $b_1$) einpolymerisiert enthält,
$b_1a_1$) 35 bis 100 Gew.-% mindestens eines Diens aus der Gruppe der konjugierten Diene mit 4 oder 5 C-Atomen,
$b_1a_2$) 0 bis 65 Gew.-% mindestens eines Monomeren aus der Gruppe der Alkylacrylate oder Alkylmethacrylate mit 1 bis 8 C-Atomen im Alkylrest, bezogen auf $b_1$),
und
$b_2$) einer auf das Elastomere gepfropften Hülle, die 70 bis 30 Gew.-%, bezogen auf B), ausmacht, und die in an sich bekannter Weise durch sukzessive Polymerisation der die Hülle aufbauenden Pfropfmonomeren in zwei Verfahrensschritten in Gegenwart des Elastomeren $b_1$) erhalten wird, mit der Massgabe, dass die Pfropfhülle einpolymerisiert enthält, bezogen auf $b_2$)
im ersten Verfahrensschritt
$b_2a_1$) 10 bis 90 Gew.-% eines Gemisches aus mindestens einem vinylaromatischen Kohlenwasserstoff ($b_2a_1\alpha$) und mindestens einem davon verschiedenen ethylenisch ungesättigten Monomeren ($b_2a_1\beta$) in einem Gewichtsverhältnis ($b_2a_1\alpha$)/($b_2a_1\beta$) von 90 zu 10 bis 60 zu 40
und
im zweiten Verfahrensschritt
$b_2a_2$) 90 bis 10 Gew.-% mindestens eines Monomeren aus der Gruppe der Alkylacrylate oder der Alkylmethacrylate mit 1 bis 8 C-Atomen im Alkylrest,
wobei die Formmasse, jeweils bezogen auf 100 Gew.-Teile A+B,
C) 1 bis 50 Gew.-Teile einer Halogen enthaltenden organischen Verbindung als Flammschutzmittel und
D) 0,1 bis 20 Gew.-Teile einer Metall oder Nichtmetall enthaltenden Verbindung (Synergist) aufweist.

5. Selbstverlöschende thermoplastische Formmasse, bestehend aus
A) 30 bis 70 Gew.-Teilen mindestens eines Polycarbonates
und
B) 70 bis 30 Gew.-Teilen mindestens eines Pfropfmischpolymerisates einer mittleren Teilchengrösse im Bereich von 200 bis 700 nm ($d_{50}$-Wert der integralen Masseverteilung),
das seinerseits besteht aus
$b_1$) mindestens einem Elastomeren (Kautschuk), das 30 bis 70 Gew.-%, bezogen auf B), ausmacht, wobei das Elastomere $b_1$) einpolymerisiert enthält,
$b_1a_1$) 35 bis 100 Gew.-% mindestens eines Diens aus der Gruppe der konjugierten Diene mit 4 oder 5 C-Atomen,
$b_1a_2$) 0 bis 65 Gew.-% mindestens eines Monomeren aus der Gruppe der Alkylacrylate oder Alkylmethacrylate mit 1 bis 8 C-Atomen im Alkylrest, bezogen auf $b_1$),
und

b₂) einer auf das Elastomere gepfropften Hülle, die 70 bis 30 Gew.-%, bezogen auf B), ausmacht, und die in an sich bekannter Weise durch sukzessive Polymerisation der die Hülle aufbauenden Pfropfmonomeren in zwei Verfahrensschritten in Gegenwart des Elastomeren b₁) erhalten wird, mit der Massgabe, dass die Pfropfhülle einpolymerisiert enthält, bezogen auf b₂), im ersten Verfahrensschritt

b₂a₁) 50 bis 75 Gew.-% eines Gemisches aus mindestens einem vinylaromatischen Kohlenwasserstoff (b₂a₁α) und mindestens einem davon verschiedenen ethylenisch ungesättigten Monomeren (b₂a₁β) in einem Gewichtsverhältnis (b₂a₁α)/(b₂a₁β) von 90 zu 10 bis 60 zu 40 und im zweiten Verfahrensschritt

b₂a₂) 50 bis 25 Gew.-% mindestens eines Monomeren aus der Gruppe der Alkylacrylate oder der Alkylmethacrylate mit 1 bis 8 C-Atomen im Alkylrest, wobei die Formmasse, jeweils bezogen auf 100 Gew.-Teile A+B,

C) 1 bis 50 Gew.-Teile einer Halogen enthaltenden organischen Verbindung als Flammschutzmittel und

D) 0,1 bis 20 Gew.-Teile einer Metall oder Nichtmetall enthaltenden Verbindung (Synergist) aufweist.

6. Verwendung von Formmassen gemäss Anspruch 1 zur Herstellung von Formteilen.

7. Formteile, hergestellt aus Formmassen gemäss Anspruch 1.

## Claims

1. A self-extinguishing thermoplastic molding composition containing
A) from 10 to 90 parts by weight of at least one polycarbonate and
B) from 90 to 10 parts by weight of at least one graft copolymer having a median particle size within the range from 200 to 700 nm (d$_{50}$ value of the cumulative weight distribution)
which consists of
b₁) at least one elastomer (rubber) which accounts for from 10 to 80% by weight, based on B), the elastomer b₁) containing in copolymerized form
b₁a₁) from 35 to 100% by weight of at least one diene from the group of the conjugated dienes of 4 or 5 carbon atoms,
b₁a₂) from 0 to 65% by weight of at least one monomer from the group of the alkyl acrylates or alkyl methacrylates of from 1 to 8 carbon atoms in the alkyl radical, based on b₁),
and
b₂) a sheath, grafted onto the elastomer, which accounts for from 90 to 20% by weight, based on B), and which is obtained in a conventional manner in two steps by successive polymerization in the presence of elastomer b₁) of the graft monomers which make up the sheath, with the proviso that the graft sheath contains in copolymerized form, based on b₂), in the first step
b₂a₁) from 10 to 90% by weight of a mixture of at least one aromatic vinyl hydrocarbon (b₂a₁α) and at least one ethylenically unsaturated monomer (b₂a₁β), different therefrom, in a weight ratio (b₂a₁α)/(b₂a₁β) of from 90:10 to 60:40
and
in the second step
b₂a₂) from 90 to 10% by weight of at least one monomer from the group of the alkyl acrylates or alkyl methacrylates of from 1 to 8 carbon atoms in the alkyl radical,
as well as based on 100 parts by weight, A+B,
C) from 1 to 50 parts by weight of a halogen-containing organic compound as flameproofing agent and
D) from 0.1 to 20 parts by weight of a metal or nonmetal-containing compound (synergist).

2. A molding composition as claimed in claim 1, consisting of components A, B, C and D.

3. A molding composition as claimed in claim 1, containing customary additives in customary amounts.

4. A self-extinguishing thermoplastic molding composition consisting of
A) from 30 to 70 parts by weight of at least one polycarbonate and
B) from 70 to 30 parts by weight of at least one graft copolymer having a median particle size within the range of from 200 to 700 nm (d$_{50}$ value of the cumulative weight distribution)
which in turn consists of
b₁) at least one elastomer (rubber) which accounts for from 30 to 70% by weight, based on B), the elastomer b₁) containing in copolymerized form,
b₁a₁) from 35 to 100% by weight of at least one diene from the group of the conjugated dienes of 4 or 5 carbon atoms,
b₁a₂) from 0 to 65% by weight of at least one monomer from the group of the alkyl acrylates or alkyl methacrylates of from 1 to 8 carbon atoms in the alkyl radical, based on b₁),
and
b₂) a sheath, grafted onto the elastomer, which accounts for from 70 to 30% by weight, based on B), and which is obtained in a conventional manner in two steps by successive polymerization in the presence of elastomer b₁) of the graft monomers which make up the sheath, with the proviso that the graft sheath contains in copolymerized form, based on b₂),
in the first step
b₂a₁) from 10 to 90% by weight of a mixture of at least one aromatic vinyl hydrocarbon (b₂a₁α) and at least one ethylenically unsaturated monomer (b₂a₁β), different therefrom, in a weight ratio (b₂a₁a)/(b₂a₁β) of from 90:10 to 60:40
and
in the second step
b₂a₂) from 90 to 10% by weight of at least one monomer from the group of the alkyl acrylates or alkyl methacrylates of from 1 to 8 carbon atoms in the alkyl radical, as well as, based on 100 parts by weight of A+B,

C) from 1 to 50 parts by weight of a halogen-containing organic compound as flameproofing agent and

D) 0.1 to 20 parts by weight of a metal or non-metalcontaining compound (synergist).

5. A self-extinguishing thermoplastic molding composition consisting of

A) from 30 to 70 parts by weight of at least one polycarbonate and

b) from 70 to 30 parts by weight of at least one graft copolymer having a median particle size within the range of from 200 to 700 nm ($d_{50}$ value of the cumulative weight distribution) which in turn consists of

$b_1$) at least one elastomer (rubber) which accounts for from 30 to 70% by weight, based on B), the elastomer $b_1$) containing in copolymerized form,

$b_1a_1$) from 35 to 100% by weight of at least one diene from the group of the conjugated dienes of 4 or 5 carbon atoms,

$b_1a_2$) from 0 to 65% by weight of at least one monomer from the group of the alkyl acrylates or alkyl methacrylates of from 1 to 8 carbon atoms in the alkyl radical, based on $b_1$), and

$b_2$) a sheath, grafted onto the elastomer, which accounts for from 70 to 30% by weight, based on B), and which is obtained in a conventional manner in two steps by successive polymerization in the presence of elastomer $b_1$) of the graft monomers which make up the sheath, with the proviso that the graft sheath contains in copolymerized form, based on $b_2$),

in the first step

$b_2a_1$) from 50 to 75% by weight of a mixture of at least one aromatic vinyl hydrocarbon ($b_2a_1\alpha$) and at least one ethylenically unsaturated monomer ($b_2a_1\beta$), different therefrom, in a weight ratio ($b_2a_1\alpha$)/($b_2a_1\beta$) of from 90:10 to 60:40 and in the second step

$b_2a_2$) from 50 to 25% by weight of at least one monomer from the group of the alkyl acrylates or alkyl methacrylates of from 1 to 8 carbon atoms in the alkyl radical, as well as, based on 100 parts by weight of A+B,

C) from 1 to 50 parts by weight of a halogen-containing organic compound as flameproofing agent and

D) from 0.1 to 20 parts by weight of a metal or nonmetal-containing compound (synergist).

6. The use of a molding composition as claimed in claim 1 for producing shaped articles.

7. A shaped article produced from a molding composition as claimed in claim 1.

Revendications

1. Matière à mouler thermoplastique, auto-extinguible, contenant

A) 10 à 90 parties en poids d'au moins un polycarbonate et

B) 90 à 10 parties en poids d'au moins un copolymère de greffage, possédant un calibre moyen des particules qui fluctue de 200 à 700 nm (valeur $d_{50}$ de la répartition massique intégrale), qui se compose

$b_1$) d'au moins un élastomère (caoutchouc), qui constitue de 10 à 80% en poids par rapport à B), où l'élastomère $b_1$) contient, incorporés par polymérisation,

$b_1a_1$) 35 à 100% en poids d'au moins un diène appartenant au groupe des diènes conjugués comportant 4 ou 5 atomes de carbone,

$b_1a_2$) 0 à 65% en poids d'au moins un monomère appartenant au groupe des acrylates d'alkyle ou des méthacrylates d'alkyle, dont le radical alkyle comporte de 1 à 8 atomes de carbone, rapportés à $b_1$),

et

$b_2$) d'une gaine ou enveloppe, greffée sur l'élastomère, qui constitue de 90 à 20% en poids, par rapport à B) et que l'on obtient, de manière en soi connue, par la polymérisation successive des monomères de greffage constituant la gaine ou l'enveloppe en deux étapes opératoires et en présence de l'élastomère $b_1$), avec la condition que la gaine ou l'enveloppe de greffage contient, incorporés par polymérisation, par rapport à $b_2$),

au cours de la première étape opératoire

$b_2a_1$) de 10 à 90% en poids d'au moins un hydrocarbure vinylaromatique ($b_2a_1\alpha$) et d'au moins un monomère à insaturation éthylénique qui en diffère ($b_2a_1\beta$) dans un rapport pondéral ($b_2a_1\alpha$)/($b_2a_1\beta$) de 90 à 10 à 60 à 40 et dans la seconde étape opératoire

$b_2a_2$) de 90 à 10% en poids d'au moins un monomère appartenant au groupe des acrylates d'alkyle ou des méthacrylates d'alkyle dont le radical alkyle comporte de 1 à 8 atomes de carbone, où la matière à mouler présente, à chaque fois par rapport à 100 parties en poids de A+B,

C) de 1 à 50 parties en poids d'un composé organique contenant un halogène, à titre d'agent ignifugeant et

D) de 0,1 à 20 parties en poids d'un composé contenant un métal ou un métalloïde (agent de potentialisation).

2. Matière à mouler suivant la revendication 1, constituée des composants A, B, C et D.

3. Matière à mouler suivant la revendication 1, où celle-ci contient les additifs usuels en proportions habituelles.

4. Matière à mouler thermoplastique, auto-extinguible, constituée de

A) 30 à 70 parties en poids d'au moins un polycarbonate et

B) 70 à 30 parties en poids d'au moins un copolymère de greffage, possédant un calibre moyen des particules qui fluctue de 200 à 700 nm (valeur $d_{50}$ de la répartition massique intégrale), qui, de son côté, se compose de

$b_1$) au moins un élastomère (caoutchouc) qui constitue de 30 à 70% en poids par rapport à B), où l'élastomère $b_1$) contient, incorporés par polymérisation,

$b_1a_1$) 30 à 100% en poids d'au moins un diène appartenant au groupe de diènes conjugués comportant 4 à 5 atomes de carbone,

$b_1a_2$) 0 à 65% en poids d'au moins un monomère appartenant au groupe des acrylates d'alkyle ou des méthacrylates d'alkyle, dont le radical alkyle comporte de 1 à 8 atomes de carbone, par rapport à $b_1$),

et

$b_2$) une enveloppe ou gaine greffée sur l'élastomère, qui constitue de 70 à 30% en poids par rapport à B) et que l'on obtient, de manière en soi connue, par la polymérisation successive des monomères de greffage constituant l'enveloppe ou la gaine en deux étapes opératoires et en présence de l'élastomère $b_1$), avec la condition que l'enveloppe ou gaine de greffage contient, incorporés par polymérisation, par rapport à $b_2$),

dans la première étape opératoire

$b_2a_1$) de 10 à 90% en poids d'un mélange d'au moins un hydrocarbure vinylaromatique ($b_2a_1\alpha$) et d'au moins un monomère à insaturation éthylénique qui en diffère ($b_2a_1\beta$) dans le rapport pondéral ($b_2a_1\alpha$)/($b_2a_1\beta$) de 90 à 10 à 60 à 40 et dans la seconde étape opératoire

$b_2a_2$) de 90 à 10% en poids d'au moins un monomère appartenant au groupe des acrylates d'alkyle ou des méthacrylates d'alkyle, dont le radical alkyle comporte de 1 à 8 atomes de carbone, où la matière à mouler présente, chaque fois rapportés à 100 parties en poids de A+B,

C) 1 à 50 parties en poids d'un composé organique contenant un halogène, à titre d'agent ignifugeant et

D) 0,1 à 20 parties en poids d'un composé contenant un métal ou un métalloïde (agent de potentialisation).

5. Matière à mouler thermoplastique, auto-extinguible, qui se compose

A) de 30 à 70 parties en poids d'au moins un polycarbonate et

B) de 70 à 30 parties en poids d'au moins un copolymère de greffage, possédant un calibre moyen des particules qui fluctue de 200 à 700 nm (valeur $d_{50}$ de la répartition massique intégrale), qui, de son côté, se compose

$b_1$) d'au moins un élastomère (caoutchouc), qui constitue de 30 à 70% en poids par rapport à B), où l'élastomère $b_1$) contient, incorporés par polymérisation,

$b_1a_1$) de 30 à 100% en poids d'au moins un diène appartenant au groupe de diènes conjugués comportant 4 à 5 atomes de carbone,

$b_1a_2$) de 0 à 65% en poids d'au moins un monomère appartenant au groupe des acrylates d'alkyle ou des méthacrylates d'alkyle, dont le radical alkyle comporte de 1 à 8 atomes de carbone, par rapport à $b_1$),

et

$b_2$) d'une enveloppe ou gaine greffée sur l'élastomère, qui constitue de 70 à 30% en poids par rapport à B) et que l'on obtient, de manière en soi connue, par la polymérisation successive des monomères de greffage constituant l'enveloppe ou la gaine en deux étapes opératoires et en présence de l'élastomère de $b_1$), avec la condition que l'enveloppe ou gaine de greffage contient, incorporés par polymérisation, par rapport à $b_2$),

dans la première étape opératoire

$b_2a_1$) de 50 à 75% en poids d'un mélange d'au moins un hydrocarbure vinylaromatique ($b_2a_1\alpha$) et d'au moins un monomère à insaturation éthylénique, qui en diffère ($b_2a_1\beta$), dans un rapport pondéral ($b_2a_1\alpha$)/($b_2a_1\beta$) de 90 à 10 à 60 à 40 et dans la seconde étape opératoire

$b_2a_2$) de 50 à 25% en poids d'au moins un monomère appartenant au groupe des acrylates d'alkyle ou des méthacrylates d'alkyle, dont le radical alkyle comporte de 1 à 8 atomes de carbone, où la matière à mouler présente, chaque fois par rapport à 100 parties en poids de A+B,

C) de 1 à 50 parties en poids d'un composé organique contenant un halogène, à titre d'agent ignifugeant et

D) de 0,1 à 20 parties en poids d'un composé contenant un métal ou un métalloïde (agent de potentialisation).

6. Utilisation de matières à mouler suivant la revendication 1 pour la fabrication d'articles moulés.

7. Articles moulés fabriqués à partir de matières à mouler selon la revendication 1.